# EUROPEAN PATENT SPECIFICATION

(11) **EP 2 747 023 B1**
(45) Date of publication and mention of the grant of the patent: **22.03.2017**
(21) Application number: 12198899.2
(22) Date of filing: 21.12.2012
(51) Int. Cl.: G06Q 50/00, H04L 29/08, H04W 12/06, H04W 84/08, H04W 88/18

(54) **Social media services for a professional mobile radio network**
Soziale Mediendienste für ein professionelles Mobilfunknetz
Services de média social pour un réseau de radiocommunications mobiles professionnel

(43) Date of publication of application: 25.06.2014
(73) Proprietor: Airbus Defence and Space Oy, 00380 Helsinki (FI)
(72) Inventor: Pesonen, Tero, 00660 Helsinki (FI)
(74) Representative: Kolster Oy Ab

(56) References cited:
- US-B1- 8 107 931
- CHI-SHENG SHIH ET AL: "Distributed service recovery for real-time pub/sub services on disaster management", 15TH INTERNATIONAL SYMPOSIUM ON WIRELESS PERSONAL MULTIMEDIA COMMUNICATIONS (WPMC), 24 September 2012 (2012-09-24), pages 494-499, XP032294385, ISBN: 978-1-4673-4533-0
- INTEL: "Proposed Proxy SSO Use Case; S1-112142", 3RD GENERATION PARTNERSHIP PROJECT (3GPP) DRAFT, August 2011 (2011-08), XP050547680, [retrieved on 2011-08-01]

## Description

### FIELD

The present invention relates to social media and to a professional mobile radio network.

### BACKGROUND ART

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Consequently PMR networks are often used in field in emergency scenarios that may influence people's health or even life.

A social media is a digital platform via which individuals can create and share user-generated content. Typical examples of social media services are Internet-based blogging-type services, like Twitter and Facebook. With the evolvement of mobile handheld devices, like smartphones and tablets, that provide access to the social media content, the social media is increasingly used for sharing real time information, even in emergency situation. At least some of the information in social media might be useful for certain PMR users.

Chi-Sheng Shih et al: "Distributed service recovery for real-time pub/sub services on disaster management" discloses an information exchange service framework named Open Information Gateway. It consists of two major components: HAPPY (heterogeneous and plug-n-play networks) for physical resource management and TRIPS (distributed Truthful Real-time Information Publishing and Subscribing) for logical resource management. The objective of HAPPY is to interconnect all network-capable devices using all kinds of possible manners, which is comprised of heterogeneous network access technologies using different approaches. The objective of TRIPS is to support distributed real-time publish and subscription (P/S) services. One capability of TRIPS is to manage the declarations, automatically establish connections between publishers and subscribers for a matching topics and dynamically detect new status in the system. When the subscribed message arrives or is sent, TRIPS delivers the message to its subscribers.

### SUMMARY

An object of the present invention is to facilitate PMR users for at least obtaining information in the social media or through the social media. The object of the invention is achieved by a method, an apparatus, a computer program product and a system which are characterized by what is stated in the independent claims. The preferred embodiments of the invention are disclosed in the dependent claims.

An aspect of the invention is to provide a gateway entity in a PRM network via which gateway entity social media content is transmitted to the PMR network and/or from the PMR network.

### BRIEF DESCRIPTION OF THE DRAWINGS

In the following, exemplary embodiments will be described in greater detail with reference to accompanying drawings, in which
Figure 1 shows simplified architecture of a system and block diagrams of some apparatuses according to an exemplary embodiment;
Figure 2 is a block diagram of an apparatus according to an exemplary embodiment;
Figures 3 to 5 are flow charts illustrating different functionalities according to exemplary embodiments; and
Figure 6 is a signalling chart according to an exemplary embodiment.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any professional mobile radio network, also known as private mobile radio and land mobile radio, or any corresponding system utilizing professional mobile radio network principles, i.e. an independent network that is dedicated to be used by a specific (closed) group of one or more users and which may use communication resources of a public network. A public network may be used by anyone, usually on a fee. The professional mobile radio network may be based on a wireless communication system or a communication system utilizing both fixed networks and wireless networks. The protocols used, the specifications of communication systems, networks, apparatuses belonging to network infrastructure, like access point nodes, controlling nodes and wireless apparatuses, develop rapidly. Such development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on a TETRA network providing the professional mobile radio network and a social media server providing a social media service platform. Other examples of systems that may provide the professional mobile radio network or corresponding independent network include TETRAPOL, DMR (digital mobile radio) systems, a PAMR network (Public Access Mobile Radio) with PMR features, and a 3rd or 4^{th}, or beyond, generation mobile network, like LTE (Long Term Evolution), with PMR features. A network with PMR features enables the provision of services with professional mobile radio (PMR) features, without any regulatory restriction regarding the targeted clientele. For example, LTE network may provide a transmission pipe, like a secure IP tunnel, between an end user apparatus comprising a TETRA user application and a social media gateway.

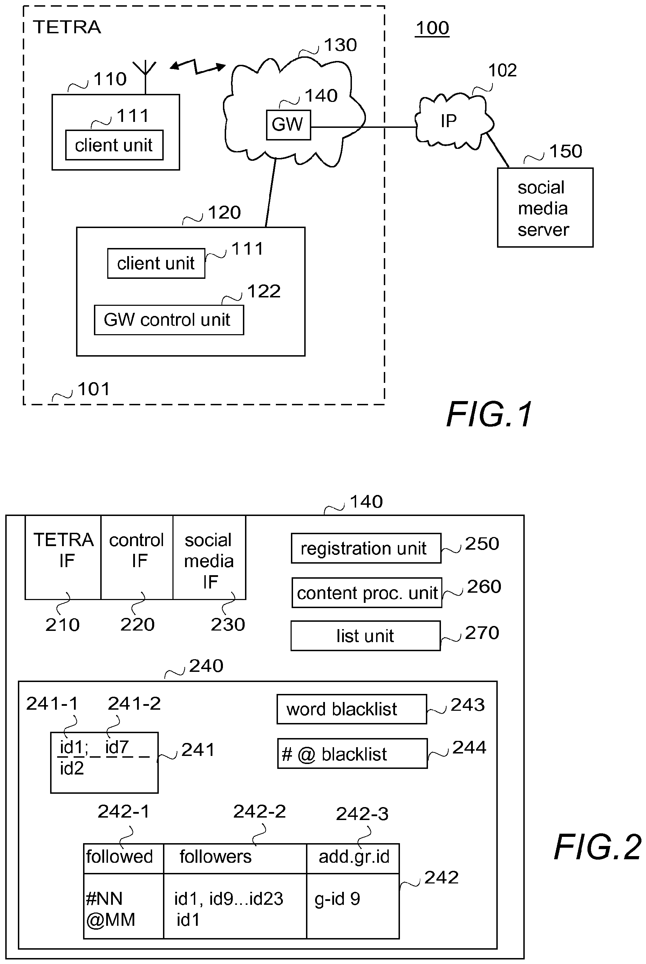

A general architecture of a communication system according to an embodiment based on TETRA and a social media server is illustrated in Figure 1. Figure 1 is a simplified system architecture only showing some apparatuses and functional entities, all being logical units whose implementation may differ from what is shown. The connections shown in Figure 1 are logical connections; the actual physical connections may be different. It is apparent to a person skilled in the art that the systems also comprise other apparatuses, functions and structures used in or for communication in TETRA and the social media server. They, as well as the protocols used, are well known by persons skilled in the art and are irrelevant to the actual invention. Therefore, they need not to be discussed in more detail here.

In the example illustrated in Figure 1, the system 100 comprises the TETRA network 101 connected via a public network 102 to the social media server 150 providing a social media service. The TETRA network 101 comprises TETRA user apparatuses 110, 120, a switching and management infrastructure SwMI 130 and a social media gateway entity 140.

One type of a TETRA user apparatus is a mobile radio apparatus 110. The mobile radio apparatus 110 may be a handheld radio apparatus, or a so called fixed radio apparatus in a vehicle, for example. The mobile radio apparatus 110 provides secure voice and/or data communications for users over the air, either over a link to SwMI or in a direct mode communication in which TETRA radio user apparatuses communicate directly with each other without using SwMI 130.

Another type of a TETRA user apparatus is a dispatching workstation. The dispatching workstation 120 illustrates a dispatching system communicating in this example with SwMI over a fixed connection. The dispatching workstation 120 can communicate with the other TETRA user apparatuses, and/or manage system, subscriber, group and/or organisation-specific parameters of the radio system.

SwMI 130 is equipment for a voice plus data (V+D) network, which enables the TETRA user apparatuses 110, 120 to communicate with each other. Further, SwMI may be connected to one or more other networks, such as another professional mobile radio network, a public cellular network, like a 3^{rd} or 4^{th} generation mobile network, a public switched telephone network, Internet and Intranet. SwMI comprises one or more digital exchanges (not illustrated in Figure 1) for taking care of switching within a network and to/from other networks, either directly or via gateways, and base stations (not illustrated in Figure 1) for over the air communication.

To support TETRA users, i.e. users using TETRA user apparatuses, for obtaining information in the social media or using, for example specifically asking, the social media for obtaining information from non-TETRA users, also called as public or individuals, SwMI 130 comprises a social media gateway (GW) entity apparatus 140 for social media communications. In the illustrated example, the social media gateway (GW) entity apparatus 140 is connected via SwMI 130 to the dispatching workstation 120 and the mobile radio apparatus 110. It should be appreciated that in other implementations the social media gateway entity apparatus 140 may be directly connected to the dispatching workstation 120 and/or to the mobile radio apparatus 110, and even be part of the dispatching workstation 120 and/or to the mobile radio apparatus 110. The social media gateway entity apparatus 140, called below "social media gateway", is described in more detail below.

To ease the use of social media in a TETRA user apparatus 110, 120, it may comprise a client unit 111 for the social media. The client unit is an application programming interface. The client unit may be a Java client, i.e. a client programmed using JavaScript. The client unit may be configured to detect and/or indicate a transmission comprising social media content from other traffic on the basis of a special indicator or a special group identifier allocated for social media, if such a feature is implemented. For example, if short message data service messages type 4 are used, a specific protocol identifier may be defined to be used in messages transmitting social media content, and then the client is configured to detect and/or indicate messages transmitting social media content with the specific protocol identifier. Further, if a flag or corresponding specific protocol identifier indicating that a message for social media service is to be delivered only within the TETRA network followers is implemented, the client is configured to add the indication to the message in response to a user instruction. However, TETRA user apparatuses without the client unit 111 may be used as well for obtaining information from social media and/or for sharing information, like sending a forward text message (a retweet) to a tweet.

Further, in the illustrated example, the dispatching workstation 120 is configured to control (manage) the social media gateway. For this purpose the dispatching workstation comprises a social media gateway control unit 122, the control unit 122 being responsive for user input for generating control messages. The control messages from the dispatching workstation 120 to the social media gateway entity 140 may be a follower request comprising one or more individual TETRA identifiers and/or one or more TETRA group identifiers as followers and indicating what is to be followed. The control message may also indicate what is not any more followed, and preferably also those who are not any more followers. The control message may indicate one or more TETRA users who are authorized to invoke "a follower request" (i.e. a registration to be a follower, or deregistration), if a feature enabling an authorized dispatching station to authorize other users is implemented. Further, the control message may add an entry to or delete an entry from a blacklist of words, if such a blacklist is implemented. In addition, the control message may add an entry to or delete an entry from a blacklist of followed ones, if such a blacklist is implemented. As can be concluded from the above, there are no limitations to the content of a control message. For example, the content may depend on policies for security, participation, roles of different apparatuses, roles of users, etc. Control messages may be driven based on policies for instance for security, participation, location, roles.

It should be appreciated that the TETRA mobile apparatus, or a peripheral (not illustrated in Figure 1) may comprise the control unit.

Further, the mobile radio apparatuses and/or the dispatching workstations may comprise memory (not illustrated in Figure 1), and/or units for providing access to other networks, like Internet. The mobile radio apparatuses and/or the dispatching apparatuses may comprise any type of subscriber identification unit or element that associates the actual terminal equipment to its present user by means of an individual TETRA identifier. Instead of the individual TETRA identifier, an alias identifier generated and associated with the individual TETRA identifier is typically used in the network. In addition, a TETRA user apparatus may be assigned to one or more groups, each group having its own group identifier, and the TETRA user apparatus is capable to receive voice and/or data and/or short data service messages addressed to any of identifiers assigned to the user or the TETRA user apparatus. The used identifier may be a short TETRA identifier or a long TETRA identifier (the long identifier comprising a mobile country code and a mobile network code and the short identifier) or any other corresponding identifier, like MS-ISDN which may be used as a virtual identifier of a TETRA user.

It should be appreciated that the number of elements, like the amount of social media gateways, and their mutual interconnections in SwMI may naturally vary according to the implementation. For example, a dispatching workstation 120 may be connected to the social media gateway 140 directly or via one or more digital exchanges. Another example includes a social media gateway integrated with another TETRA gateway entity.

The public network 102 may comprise one or more networks, which may be of same type or different type. Typically social media servers 150 are connected to an Internet Protocol-based public network, and they use protocols like http (Hypertext Transfer Protocol) or https (Hypertext Transfer Protocol Secure Hypertext Transfer Protocol Secure) for transmission.

The social media server 150 represents one or more network entities providing social media. A social media (or social media service) may be defined as a connectionless application/platform which a user uses to publish content that is typically, but not necessarily, by default public at least to other users of the specific social media or "followers" or "friends".

Examples of web-based public services that can provide the social media server include Twitter, Facebook, Google+, a blogger application, a web-based discussion forum application, MySpace, YouTube, and LinkedIn. The social media server may be also a private social media providing private communication within organizations or between organizational members and pre-designated groups. Examples of the private social media include Yammer and Microsoft Lync. WhatsApp, supporting closed user groups, is also a kind of private social media. The difference between the public and the private social media is that to obtain access to the private social media, the entity wanting to obtain access has to be accepted by an authority in the private social media in advance, for example by giving an email account in the domain used by the private organizations or by sending an invitation to join, whereas in public social media at most a registration is needed. Another way to define the difference is that a private social media is a closed service, typically organisation-specific, whereas a public social media is an open service, or a semi-open service, typically cross-organisational service.

It should be appreciated that the amount of social media services including web-based public and private services, like the above identified micro-blogging services and social status update publication applications, is evolving and the above list is not an exhaustive list.

Figure 2 is a block diagram illustrating some units of the social media gateway 140 according to an exemplary embodiment. In the embodiment it is assumed that two different categories for authorization exist, and only one social media account is used.

The social media gateway comprises one or more interfaces 210 (TETRA IF) towards the TETRA network with a corresponding individual TETRA identifier so that the social media gateway is addressable. TETRA user apparatus to the TETRA mobile apparatuses and dispatching workstations; one or more interfaces 220 (control IF) for enabling authorized users to control/manage the social media gateway and/or open account(s) or associate existing account(s) with the social media gateway; and one or more interfaces 230 (social media IF) towards the public network with a corresponding address so that the social media gateway appears as a normal user to the social media server.

The social media gateway comprises memory 240 for storing different lists and associations for social media service. The stored information and/or the amount of different lists depend on implementation. There may be several social media user identities, typically called as accounts, different lists may be maintained account-specifically, TETRA user -specifically, and/or common to all TETRA users and/or accounts. Hence, there are no limitations for different lists and their content, the only prerequisite is that individual information on TETRA users that is maintained in the TETRA network is not transmitted or otherwise revealed as such to the social media server. The prerequisite is needed for security. Nevertheless, the social media user identity may be descriptive, like HelsinkiFire_on-Call, or even pointing to a specific person/role such as @head_of_police, since it does not reveal the identifiers used in TETRA network. The same applies also to content in a message; it may identify a place, like "Harrods", but it does not reveal the specific location coordinates, for example. However, descriptive social media user identities and/or words associated with a specific place, may be blacklisted, i.e. denied. The social media user identities, location information revealed, etc. are user organisation choices, as well as what a user chooses to share, they are not automatically added or generated by the system.

In the illustrated example, the memory comprises an authorization list 241 containing identification information 241-1 on those TETRA users of TETRA user apparatuses, i.e. in the illustrated example, dispatching workstations that are authorized by the network management system to control the social media gateway and to control the usage of the social media gateway via the control interface 220. Below such users are called network authorized users. In the example, the list contains also identification information 241-2 on TETRA users that are authorized to indicate/request and/or choose what to follow or not to follow by a network authorized user. Below such users are called additionally authorized user. In the exemplary authorization list 241, the additional authorizations 241-2 are associated with the authorizing network authorized user 242-1 to ensure that only the one who has given the additional authorization can remove the authorization. In another implementation, at least the network authorized users 241-1 and possible the additional authorizations 241-2 may be embedded into a SwMI generic rights management entity.

Further, the memory comprises in the example, a follower table 242 associating "followed" 242-1 with those following, i.e. followers 242-2, and with an additional group TETRA subscriber identity 242-3 (add.gr.id), if such an identity is allocated for the followers. "Followed" 242-1 indicates social media username(s), and/or word(s) that are followed in the social media. Followers 242-2 associate TETRA user identifiers with what is followed "followed"-specifically, and the additional group TETRA subscriber identity 242-3 are auxiliary means to handle transmission of content in the TETRA network. Naturally, the association may be performed so that the association is TETRA user identifier -specifically, and any form suitable to associate the information may be used. Since the association may be very dynamic and role-dependent, instead of a TETRA user/group identifier, a radio user assignment (RUA) may be used, for example. Thanks to the association, the confidential TETRA network information remains within the TETRA network and a TETRA user still receives the content he/she is supposed to follow in the social media as a TETRA user. Other advantages include that it is sufficient to use user rights defined for the TETRA network for an individual user, there is no need to provide rights for external networks or allocate an identifier which to use in the social media. Further, multiple TETRA users can follow the same account or word in the social media, looking as one follower in the social media.

The memory may also comprise a blacklist of words 243 identifying forbidden words in a content and a blacklist of "followed" 244 for identifying those entities that are not to be followed. A blacklist may be implemented also in a negative manner, i.e. any word or entity that is not in a corresponding list, is interpreted to be forbidden.

Should the social media gateway have several social media accounts, one or more of the lists may be maintained account-specifically and/or shared by two or more social media gateway accounts.

To enable interaction with the social media server, the social media gateway comprises a registration unit 250 for registering and deregistering to follow something in the social media, and a content processing unit 260 for processing content from followed social media. The registration unit 250 may be configured to form groups from different followers, as will be described below. The registration unit 250 may comprise subunits, like a service registration unit, a service deregistration unit and a grouping unit, if a grouping feature is implemented. Below they are described as one unit. The content processing unit may be configured for processing content to be sent to the social media depending on whether or not sending content to the social media is allowed. The content processing unit 260 may comprise subunits, like a filtering unit, a content receiving unit, and a content sending unit. However, below they are described as one unit. Further, there may be an information caching unit (not illustrated in Figure 2) for storing pictures downloaded from the Internet, for example. The information caching unit may be a subunit of the content processing unit 260, or a separate unit. An advantage of having the information caching unit is that by caching information the use of traffic resources between the social media gateway and the social media server may be minimized, since if the content obtainable by clicking an embedded link is in the caching unit, there is no need to obtain the content from the social media server, i.e. no traffic is generated between the social media gateway and the social media server.

Further, the social media gateway may comprise a list unit 270 that is configured to add or remove entries in one or more of the above described blacklists according to instructions received from a TETRA user apparatus. Depending on an implementation, the list unit may be configured to reject all other instructions relating to a list except instructions received from any TETRA user and/or a network authorized user and/or an additionally authorized user and/or a field operative, and a TETRA user located in a specific place, etc. Each list may have its own authorization, there may be a common authorization, account-specific authorization and/or some list may share authorization while the others have list-specific authorizations, for example. The list unit may be configured to maintain a list hashtag-specifically, account-specifically, user-specifically, "audience"-specifically (audience may be secret police or traffic police), etc.

Although in the above illustrated example the social media gateway comprises several lists and units that need not to be the case. It suffices that the social media gateway has information on what is followed and by whom (by which TETRA identifiers). In other words, it suffices that the social media gateway is configured to link one or more TETRA users with a social media account.

It should be appreciated that each of the units in the social media gateway may be a separate unit or integrated to another unit, or the units may be integrated together.

The mobile radio apparatuses, the apparatuses for dispatching workstations or corresponding apparatuses providing access to PMR network, as well as the apparatus providing the social media gateway are computing devices comprising not only prior art means, but also means for implementing one or more functionalities described below with a corresponding node/apparatus. Each apparatus may comprise separate means for each separate function a corresponding node is described to perform, or means may be configured to perform two or more functions, and even to combine functions of different embodiments/examples. These means may be implemented by various techniques. For example, the means may be implemented in hardware (one or more apparatuses), firmware (one or more apparatuses), software (one or more modules), or combinations thereof. For a firmware or software, implementation can be through units/modules (e.g., procedures, functions, and so on) that perform the functions described herein. Coding of software for carrying out the steps shown and described below is well within the scope of a person of ordinary skill in the art, once the steps with the description has been shown to him/her.

In addition, the apparatuses comprise different interface units, such as one or more receiving units (not illustrated in Figures) for receiving different inputs, control information, requests and responses, for example, and one or more sending units (not illustrated in Figures) for sending different outputs, control information, responses and requests, for example. The receiving unit and the transmitting unit each provide an interface in the apparatus, the interface including a transmitter and/or a receiver or a corresponding means for receiving and/or transmitting information, and performing necessary functions so that content, control information, etc. can be received and/or transmitted. The receiving and sending units may comprise a set of antennas, the number of which is not limited to any particular number.

An apparatus implementing functionality or some functionalities according to an embodiment may generally include a processor (not shown in Figures 1 and 2), controller, control unit, micro-controller, or the like connected to a memory and to various interfaces of the apparatus. Generally the processor is a central processing unit, but the processor may be an additional operation processor. The client unit 111, and/or the social media gateway control unit 122, and/or the registration unit 250, and/or the content processing unit 260 and/or the list unit 270, or corresponding units when another system is used, may be configured as a computer or a processor, or a microprocessor, such as a single-chip computer element, or as a chipset, including at least a memory for providing storage area used for arithmetic operation and an operation processor for executing the arithmetic operation. The client unit 111, and/or the social media gateway control unit 122, and/or the registration unit 250, and /or the content processing unit 260 and/or the list unit 270, or corresponding units when another system is used, may comprise one or more computer processors, application-specific integrated circuits (ASIC), digital signal processors (DSP), digital signal processing devices (DSPD), programmable logic devices (PLD), field-programmable gate arrays (FPGA), and/or other hardware components that have been programmed in such a way to carry out one or more functions of one or more embodiments. An embodiment provides a computer program embodied on any client-readable distribution/data storage medium or memory unit(s) or article(s) of manufacture, comprising program instructions executable by one or more processors/computers, which instructions, when loaded into an apparatus, constitute client unit 111, and/or the social media gateway control unit 122, and/or the registration unit 250, and /or the content processing unit 260 and/or the list unit 270, or corresponding units when another system is used. Programs, also called program products, including software routines, program snippets constituting "program libraries", applets and macros, can be stored in any medium, and may be downloaded into an apparatus. The data storage medium or the memory unit may be implemented within the processor/computer or external to the processor/computer, in which case it can be communicatively coupled to the processor/computer via various means as is known in the art.

The memory may be, for example, volatile and/or non-volatile memory, for example EEPROM, ROM, PROM, RAM, DRAM, SRAM, firmware, programmable logic, double floating-gate field effect transistor, etc. and typically store content, data, or the like, and the memory may store the information needed for the wireless local area network connection as well as other information. Further, the memory may store computer program code such as software applications (for example, for the client unit 111, and/or the social media gateway control unit 122, and/or the registration unit 250, and/or the content processing unit 260 and/or the list unit 270, or corresponding units when another system is used) or operating systems, information, data, content, or the like for the processor to perform steps associated with operation of the mobile access point node and/or the hand portable apparatus in accordance with embodiments. The memory may be a hard drive, other fixed data memory or storage device, a cloud server, a virtual storage server, or any combination thereof. Further, the memory, or part of it, may be removable memory detachably connected to the apparatus.

Although the mobile radio apparatus, the dispatching workstation and the social media gateway have been depicted as one unity, different processors, controllers, interfaces and/or memory may be implemented in one or more physical or logical units or virtual units.

Below different examples are described using Twitter as an example of the social media, the content of which is transmitted in the TETRA network by means of short data service SDS. Short data messages, called SDS messages, are text (or other format, such as binary) messages that can be transmitted in the TETRA network between TETRA user apparatuses and network elements. SDS messages can be sent to individual TETRA users, to groups or broadcast on one or more base stations to all TETRA users using the one or more base stations. A maximum length of the content in an individual SDS message is 140 bytes without concatenation providing 140 characters with 8 bit coding.

Twitter is a web-based public micro-blog service in which a maximum length of a post is limited to 140 characters. A post is a user created content that is published on the user's account in the Twitter server. The post is also called a tweet. To be able to use the Twitter, a user has to register to the Twitter service and the user receives an account for the Twitter, the account being in a Twitter server. One of the features in Twitter is that a user can automatically follow what is posted on other users' accounts by registering as a follower of a specific account. Each account is associated with a username, and when a username in a tweet is preceded by @, it becomes a link to a Twitter profile. Nowadays it is also possible to track in real-time tweets having a specific word combined with a hash symbol (#) after one has registered to follow such a combination, the combination of the hash symbol and the word being called hashtag. To improve account security, Twitter enables permanent use of https in transmissions thereby allowing encrypted communication and that a user may always be logged into Twitter via https.

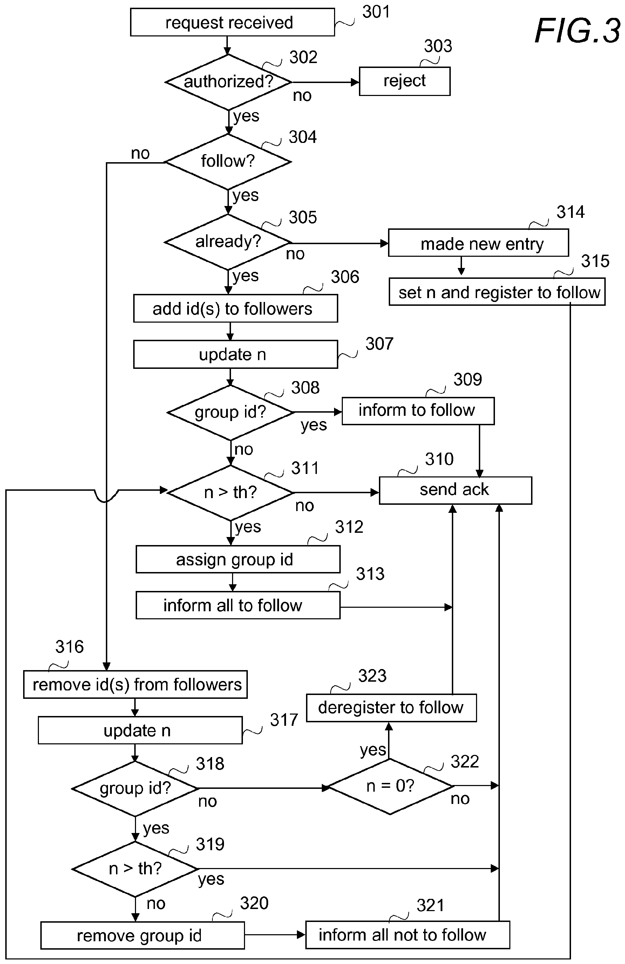

Figure 3 illustrates an exemplary functionality how the social media gateway processes a request relating to what is followed. More precisely, it describes the functionality of the registration unit. In the example it is assumed, for the sake of clarity, that the social media gateway has one Twitter account, like @police, and is following hashtags. If in the social media used an additional service for real-time tracking hashtags is required, it is assumed that the social media gateway has subscribed such a service. Naturally one or more identities, such as @Elancourt_neighbourhood_watch, may be followed as well. However, as said above, the following use the hashtag as an example for the sake of clarity.

In the example, it is further assumed that the social media gateway is configured to form groups when the number of followers of one hashtag exceeds a threshold. For that purpose, the social media gateway has a pool of group subscriber identities wherefrom to select or is configured (and authorized) to assign dynamic group addresses. The threshold value may be hard-coded to the social media gateway, or received from a dispatching working station, or set dynamically by SwMI based on system load, for example. Further, the social media gateway is configured to use TETRA dynamic group number assignment for informing TETRA user apparatuses belonging to the group either to listen to a group address or stop to listen a group address. Other mechanisms, like Call-out mechanism, may be used as well for the purpose.

When a request to follow or to stop to follow is received in step 301 from the TETRA network, it is checked in step 302, whether or not the request is received from an authorized entity. In other words, it is checked, whether or not in the authorization list a corresponding identity is found. If a corresponding identity is in the list, the request is from an authorized entity. In this example there is no difference between a network authorized entity and an additionally authorized entity, but in another implementation only network authorized entities may be allowed to request to follow or stop to follow.

If the request is not from an authorized entity (step 302), the request is rejected in step 303.

If the request is from an authorized entity (step 302) it is checked in step 304, whether or not the request is for starting to follow a hashtag. If the request is for starting to follow a hashtag (step 304) by one or more specific TETRA identifiers, it is checked, in step 305, whether or not the hashtag is already followed. If it is, the one or more new TETRA identifiers received with the request are added in step 306 to the follower table as followers of the hashtag. In other words, if a TETRA identifier included in the request is already in the follower table as a follower of the hashtag, it is not added. If all identifiers are in the list, nothing is added. The amount of followers of the hashtag, n, is updated in step 307 by increase of a value corresponding to the amount of identifiers added to the follower table. Then it is checked, in step 308, whether or not the hashtag has a gateway assigned group identifier. If it has, the one or more new specific TETRA identifiers are used in step 309 to inform corresponding apparatuses that it/they should listen to the gateway assigned group identifier. Then an acknowledgement to the request is sent in step 310.

If the hashtag has not a gateway assigned group identifier (step 308), it is checked in step 311, whether the updated n is bigger than the threshold value th. If not, the process proceeds to step 310 to send the acknowledgement. If the updated n is bigger than the threshold value (step 311), a group identifier is assigned to the hashtag in step 312, and then a message is sent in step 313 to all TETRA identifiers that are followers of the hashtag in the follower table to inform them that they should listen to the gateway assigned group identifier. Then an acknowledgement to the request is sent in step 310.

If the hashtag is not yet followed (step 305), a new entry is made to the follower table in step 314, the entry comprising the hashtag and the one or more TETRA identifiers in the request as followers of the hashtag. Then the value n for followers is set in step 315 to correspond the amount of the one or more TETRA identifiers. Further, the Twitter account of the social media gateway is used in step 315 in the registration as a follower of the hashtag by sending a corresponding message to the Twitter service. Hence, the real identity of the follower is not sent to the public network. Then the process proceeds to step 311 to check, whether or not the value n exceeds the threshold th.

If the request is for stopping to follow a hashtag by one or more TETRA identifiers (step 304), the corresponding identifiers are removed in step 316 from the followers of the hashtag in the follower table, and the amount of followers n is updated correspondingly in step 317 by decreasing it with a value corresponding to the amount of removed TETRA identifiers.

Then it is checked in step 318, whether or not the hashtag has a gateway assigned group identifier. If it has, it is checked in step 319, whether the updated n is still bigger than the threshold. If it is, the process proceeds to step 310 to send an acknowledgement. If the updated n is not bigger than the threshold (step 319), the gateway assigned group identifier is removed in step 320, and a message informing to stop to listen the group identifier is sent in step 321 using TETRA identifiers which still are in the follower table as followers of the hashtag. Although TETRA user apparatuses are configured to listen transmissions to each identifier assigned to them, and hence the step 321 may be omitted, by sending the message, the gateway assigned TETRA group identifier can be reused almost immediately and still ensuring that only those who are supposed to follow, will follow. Then the acknowledgement is sent in step 310.

If the hashtag does not have a gateway assigned group identifier (step 318), it is checked whether or not there are any followers. In other words, in step 322 it is checked whether or not n equals to zero. If it does not, the acknowledgement is sent in step 310. However, if there are no more followers (step 322), the Twitter account of the gateway is used in step 323 to deregister itself as a follower of the hashtag by sending a corresponding message to the Twitter service. Then the acknowledgement is sent in step 310.

As is evident from the above, the social media gateway with one Twitter account appears as a super active and very widely following account to the Twitter. Even if the social media gateway has two or more accounts, each account or at least some of them will most probably still appear very active and widely following. This in turn will draw non-TETRA users to follow the Twitter account(s) of the social media gateway, and hence an information request in the Twitter account will draw more attention and replies.

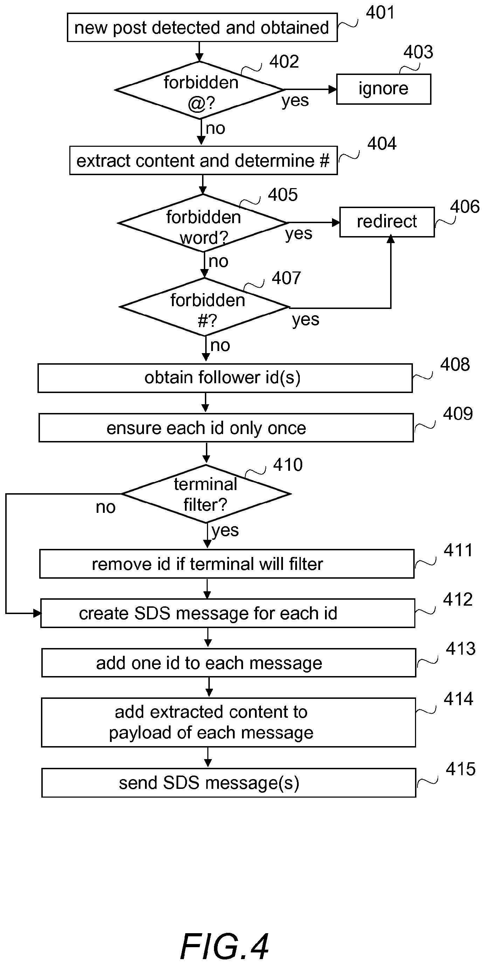

Figure 4 is a flow chart illustrating an exemplary functionality how the content in the social media server is delivered to TETRA user apparatuses. More precisely, it describes a part of a functionality of the content processing unit. In Figure 4 it is assumed that once an account has registered to follow another account or hashtag, posts which are followed, are automatically sent to the following account (follower account).

In the example below it is assumed, for the sake of clarity, that common blacklists are used for filtering some posts (tweets) away. However, similar principles may be used, if some blacklists are common, some depending on the used account of the social media and/or some being TETRA user - specific. For example, a content of a tweet without a hashtag associated with a predefined word or a name of a location corresponding to the actual location of one or more TETRA user apparatuses may be filtered. By means of the filtering only relevant information is forwarded to TETRA users. In other words, the main purpose of inbound filtering is to discard spam and enable focus on relevant topics. Yet another filtering-related feature is that in the below example, it is assumed that a client in a TETRA user apparatus may be configured to itself filter certain posts that contain a forbidden item (word, hashtag, account). Since the filtering criteria in a TETRA user apparatus may be different from the filtering criteria in the social media gateway, in the example it is assumed that the client is configured to send the social media gateway information on the client's capability to filter and the filtering criteria, and the social media gateway is configured to associate this filtering information with a corresponding TETRA user.

When the social media gateway detects in step 401 a new post in its account, it obtains in step 401 the post using http or https. Then it is checked in step 402, using poster's account information in the post, whether or not the poster is in the list of forbidden posters. If the poster is a forbidden one, the post is ignored or discarded in step 403. This provides an easy way to block tweets from a malicious poster, i.e. a Twitter user posting to the account.

If the poster is not a forbidden one (step 402), the content of the post is extracted in step 404, and the hashtags in the content are determined in step 404. After that it is checked in step 405, whether or not the post contains a forbidden word defined in the list of forbidden words. If there is a forbidden word, the post is deleted in step 406. If none of the words is forbidden, it is checked in step 407, whether or not one of the determined hashtags, if such exits, is a forbidden one. If there is a forbidden hashtag, the post is redirected in step 406 to a reviewer, like a user of a dispatching station, who then decides, if the post should be distributed or ignored/discarded. This has an advantage that if a post contains both allowed hashtag(s) and/or word(s) and forbidden hashtag(s) and/or word(s), or only forbidden hashtag(s), the post may be delivered if the reviewer judges so. Hence, if a topic s getting "hot", the post wil be delivered. Alternatively, step 406 may be identical to step 403 (i.e. the post is ignored or discarded).

If none of the possible hashtags is forbidden, the one or more hashtags and the poster account information are used in step 408 for obtaining corresponding TETRA identifiers from the follower table. If a hashtag or a poster's account information has a gateway assigned group identifier, it is obtained, and otherwise the identifiers listed as followers are obtained for each hashtag/poster's account. To ensure that each follower obtains the content of the post only once, the obtained identifiers are compared in step 409 with each other and duplicates are removed so that an identifier is in the obtained list only once. This is performed due to the fact it may be that one post contains, for example, two or more hashtags that are followed separately but it suffices to send the content of the post only once to a TETRA user. However, this step may be skipped in another implementation. When TETRA identifiers are known, it is checked in step 410, whether a corresponding TETRA user apparatus has indicated to the social media gateway that the TETRA user apparatus is configured to filter and what it is set to filter (i.e. the filtering criteria of the client). Hence information that would be filtered by the TETRA user apparatus is not sent in vain over SwMI, and network resources, especially air interface resources remain available for other use. If a TETRA user apparatus is going to filter the content (step 410), the corresponding TETRA identifier is removed in step 411 from the TETRA identifiers determined in step 409. In other words, there are several possibilities to filter, and filtering may vary from implementation to another. For example, in TETRA several layers (Open Systems Interconnection layers, OSI-layers) may be used for filtering: one based on the group identifier (whether or not the TETRA user apparatus follows it), another one based on filtering rules of a receiving application, the filtering rules being targeted to the content delivered in the message (like spamm filter for e-mail), and a further one based on user-specific rules in an application handling the message. An advantage of having knowledge that an application in the user apparatus will perform filtering is that it enables to use the same group identifiers for messages that are not intended for all.

Then, or if no TETRA user apparatus is set to filter (step 410), as many SDS messages as there are TETRA identifiers left are created in step 412, an identifier amongst the TETRA identifiers is set as a recipient address to one SDS message in step 413 so that each SDS message has a recipient address that is different from the recipient addresses in the other SDS messages, and the extracted content of the post is added in step 415 to be the payload to each SDS message. Since the maximum amount of characters in SDS and Twitter is the same, there will be no need to create concatenated SDS messages or otherwise resolve a problem how to adjust a length of a content or payload. Then the SDS messages are sent in step 415 towards the recipients, the SDS messages containing the social media gateway's TETRA identifier as a sender identifier.

In an implementation, the step 415 includes finding out base station -specifically group members served by the base station, and to use the group identifier for delivering SDS message via base station serving at least two (or some other limit value, bigger than two) group members and to use an individual identifier for delivering SDS message if only one (or one less than the limit value) group member is served by a base station. This maximises the quality of service (QoS) and minimises the use of resources, like transmission resources on the air interface.

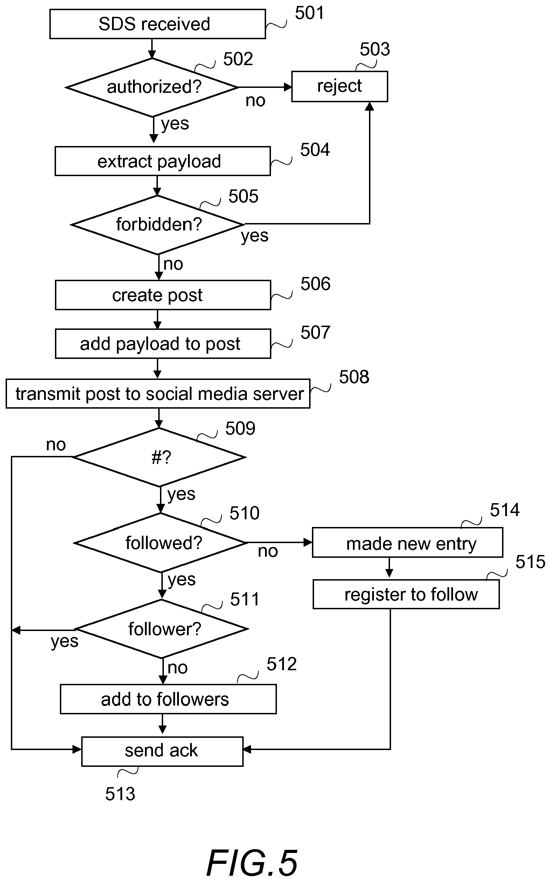

Figure 5 is a flow chart illustrating an exemplary functionality how TETRA users may post to the social media server. More precisely, it describes another part of a functionality of the content processing unit. In the illustrated example it is assumed, for the sake of clarity, that the social media gateway has one Twitter account. Other assumptions include that only authorized users are allowed to post, i.e. send tweets to the Twitter account, provided that the content is not forbidden. Content may be forbidden because it contains a forbidden word, a forbidden hashtag, it does not contain a specific hashtag or a combination of hashtags etc. There are no restriction which may be forbidden and how it is forbidden. The main purpose of out-bound filtering is to protect against (un)intentional leakage of classified information or corresponding information. It should be appreciated that if the social media gateway has two or more Twitter accounts, each account may have its own filtering criteria and/or the filtering criteria may be TETRA user -specific.

In response to receiving in step 501 an SDS message as a reply to a previously sent post, or a separate request addressed to the TETRA identifier of the social media gateway, it is checked in step 502, whether or not the requester is an authorized one. The check may be performed by checking the authorization list. If the requester is not an authorized one, the request is rejected in step 503.

If the requester is an authorized one, the payload of the SDS message is extracted in step 504, and it is check in step 505, whether or not the payload contains a forbidden item (like a word, hashtag, hashtag combination, word and hashtag combination, etc.), the step 505 combining one or more of the different steps 402, 405, 407 in Figure 4. If the payload contains a forbidden item (step 505), the request is rejected in step 503.

If the payload does not contain a forbidden item (step 505), an empty post for the Twitter account is created in step 506, the extracted payload is added in step 507 to be the content of the post and the post is transmitted in step 508 using https (or http) to the Twitter account of the social media gateway, the post showing the social media gateway as the poster. Hence, the transmission of the post in the example does not use public air interface, but directly IP traffic, and even IP traffic that is constantly in a https tunnel.

In the illustrated example, it is checked in step 509, whether or not the payload of the SDS contained a hashtag. If it contained, it is checked, in step 510, whether the hashtag is already followed, and if yes, whether or not the TETRA user who sent the SDS message is already a follower of the hashtag (step 511). If not, the TETRA user identifier is added in step 512 to be a follower of the hashtag in the follower table, and an acknowledgement is sent in step 513 to the sender of the SDS message received in step 501.

If the hashtag is not already followed (step 510), a new entry for the hashtag is made into the follower table in step 514 associating the hashtag and the TETRA user identifier as a follower of the hashtag. Then the social media gateway registers in step 515 itself (i.e. the Twitter account) to follow the hashtag in the social media server, and the process proceeds to step 513 to send an acknowledgement.

If there is no hashtag (step 509), or if the hashtag is already followed by the sender of the SDS message (step 511), the process proceeds to step 513 to send an acknowledgement.

In one implementation, registering unit may be triggered to perform steps 512, 514 and 515. If the social media server is configured to create groups for followers, steps corresponding to steps 306 to 315 may replace steps 512 to 515.

The SDS message received in step 501 may contain a multimedia link. In that case, the multimedia content, like a photo, may be delivered using TETRA IP or concatenated SDS messages, for example, and the client unit may be configured to take care of delivering the content. The social media gateway GW may be configured to store the multimedia content it received and to upload the content with the corresponding tweet to Twitter regardless of whether the multimedia content is received in outbound SDS message(s) or using TETRA IP. Alternatively, the entire transaction of the multimedia content may be performed by using TETRA IP.

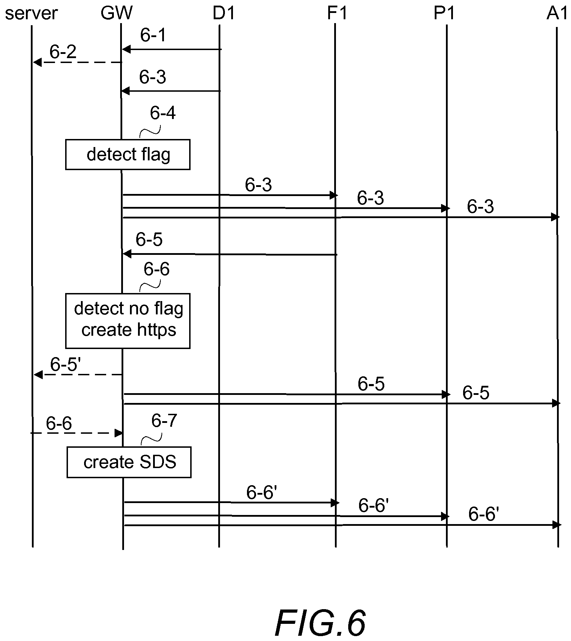

Figure 6 is a signalling chart illustrating another exemplary functionality of the system. In the illustrated example, it is assumed that posts originating from TETRA users are not filtered. A further assumption is that a post (tweet, content) from a TETRA user may indicate that it is intended to be delivered only within TETRA users, not to be published on a Twitter account. The SDS header may include a specific protocol identifier to indicate delivery either to social media service and TETRA users or only to TETRA users, for example. In the figure dashed line means transmissions using https, solid lines means TETRA messages.

In the example, a user of a dispatching station D1 in an emergency centre has received information on a pileup on Turuntie (Turku highway) near Veikkola, decides to send to the scene ambulances, polices and firemen. Today incident information is often in social media before authorities arrive to the scene. Since the user of D1 considers that the field leaders of each different group of PPDR (Public Protection and Relief) users sent to help in the pileup scene would benefit from information provided by individuals in or near the scene but sending the information to all users sent to the scene may disturb their work, the user decides to form a kind of ad hoc group receiving posts having #Turuntie and #Veikkola. Therefore message 6-1 is sent from D1 to the social media gateway GW, message 6-1 indicating that F1, P1 and A1 register to follow #accident, #Turuntie and #Veikkola. In response to receiving message 6-1, the social media gateway GW, having a Twitter account @emergency registers, by sending message 6-2, the Twitter account @emergency to follow #accident, #Turuntie and #Veikkola, and associates F1, P1 and A1 as followers of #accident, #Turuntie and #Veikkola.

The user of D1 wants also to inform the field leaders on the hashtags that they are now following, and forms an internal tweet 6-3. Tweet 6-3 is an SDS message having a flag indicating that it is to be delivered only within the professional mobile network. The content of tweet 6-3 may be: "use #Turuntie and #Veikkola in tweets".

When tweet 6-3 is received in the social media gateway GW, it detects the flag in point 6-4, determines from the content #Turuntie and #Veikkola, obtains TETRA identifiers following both hashtags, and forwards the tweet (i.e. the SDS message) to F1, P1 and A1. The corresponding TETRA user apparatuses show the content on their user interface, and hence the users are informed that Twitter follow-up is delegated to them.

The user of F1 wants to find out before they arrive to the scene, whether or not one or more cars are on fire. Therefore tweet 6-5 is sent to the social media gateway GW, tweet 6-5 being an SDS message with content "Is in the lineup #Turuntie and #Veikkola cars on fire? Any photos?".

The social media gateway GW detects in point 6-6 that the tweet 6-5 is also to be posted on the social media server. Therefore the social media gateway GW creates an https-based message in point 6-6, determines from the content of tweet 6-5 hashtags #Turuntie and #Veikkola, obtains TETRA identifiers following both hashtags, and forwards the tweet (i.e. the SDS message) to P1 and A1. Depending on an implementation, the gateway GW may use as a sender address of the SDS message its own address or the address may show the real originator. In the latter case, the protocol of the SDS messages may be enhanced to have a reply-to-address to ensure that a reply SDS message is sent to the gateway GW, or the client unit may be configured always send an SDS message containing social media and a response to such a message to the gateway GW, implementing a similar syntax as is implemented in store-and-forward SDS messages, for example. Further the content is posted in message 6-5' to the account @emergency, the message containing the same content as messages 6-5, but being in https format and having the account as the sender.

A post 6-6 "#Turuntie #Veikkola car fire, see link xyz" is posted to the social media server, and since it contains hashtags followed by account @emergency, the social media gateway obtains post 6-6, extracts the content, determines hashtags and obtains identifiers following the hashtags. Then the social media server creates three SDS messages, adds the content of the post to the payload of each SDS message and sends to F1, P1 and A1 message 6-6'. The corresponding TETRA user apparatuses show the content on their user interface so that the users can utilize the information, for example click the link and watch a short video.

In an implementation, combinable with any of the above examples, the flag indicating that a message is to be delivered only within the professional mobile network may be used to deliver photos, etc. For example, if the social media gateway receives an SDS message with the flag and a content containing a pointer to a photo stored in the TETRA network and is configured to interpret such SDS message as "photo push command", the content is processed before it is delivered to followers in the TETRA network. For example, the social media gateway (or the content processing unit) may be configured to download the photo, compress (pack) it, resize to fit on terminal screens, and replace the pointer with the outcome, and possibly also hashtags, etc., in the SDS message and then push SDS messages to followers in the TETRA network. Naturally, a specific flag to indicate "push photo to TETRA users" may be used instead of the combination of flag and interpretation of the pointer.

As is evident from the above, a social media gateway does not need any changes in the social media service side, or not in the public network; all amendments and configurations are in the PRM side. Further, the control of use of social media in the PMR network remains in the PMR network. The above described examples also illustrate that the social media gateway enables access to emergency information shared in social media service and provides means to interact immediately for instance for incident management.

Another advantage provided by the specific implementation of TETRA and Twitter is that mere TETRA does not provide possibility to "subscribe" to information relating to a certain keyword but combining TETRA and Twitter provides the feature, even to information transmitted only within the TETRA network, as the example of Figure 6 describes.

The steps/points, messages and related functions described above in Figures 3 to 6 are in no absolute chronological order, and some of the steps/points may be performed simultaneously or in an order differing from the given one. For example, steps 509 to 515 may be performed simultaneously with or before steps 506 to 508. Other functions can also be executed between the steps/points or within the steps/points and other messages sent between the illustrated messages. For example, the specific protocol identifier defining that an SDS message contains social media content may be added in step 412 or 413 or 414, or after step 414 before sending the SDS message. Some of the steps/points or part of the steps/points can also be left out or replaced by a corresponding step/point or part of the step/point. For example, step 302 and/or steps 307 to 313, steps 317 to 321, i.e. creating and maintaining ad hoc groups, may be left out. Another example is that steps 402 to 403 and/or steps 405 to 408 and/or steps 410 to 411 may be left out. Yet further examples include leaving steps 502 to 503 and/or step 505 and/or steps 509 to 515 out. The messages are only exemplary and may even comprise several separate messages for transmitting the same information. In addition, the messages may also contain other information and/or be of different type, like TETRA data or enhanced TETRA data messages, TETRAPOL SDS messages, short message service (SMS) messages, etc.

It will be obvious to a person skilled in the art that, as technology advances, the inventive concept can be implemented in various ways. The invention and its embodiments are not limited to the examples described above but may vary within the scope of the claims.

## Claims

1. A method comprising:
providing a network entity of a professional mobile radio network with one or more social media service identities by means of which the network entity appears as a normal user to a social media server providing a social media service;
receiving, in the network entity, from a user apparatus of the professional mobile radio network, a request to follow a specific item in the social media service;
associating in the network entity the user apparatus with the specific item; and
registering, by the network entity using a social media service identity the network entity has, to the social media service to follow the specific item.

2. A method as claimed in claim 1, further comprising:
checking, in response to receiving the request, in the network entity whether or not the user apparatus is authorized to request to follow the specific item; and
if the user apparatus is not authorized, rejecting the request.

3. A method as claimed in claim 1 or 2, further comprising:
checking in the network entity whether or not it is allowed to follow the specific item; and if not, rejecting the request.

4. A method as claimed in claim 1, 2 or 3, further comprising:
comparing, in the network entity, the amount of user apparatuses associated with the specific item to a threshold;
in response to the amount exceeding the threshold, forming a temporary group for the user apparatuses; assigning to the group a professional mobile radio group identifier and using the group identifier to transmit social media content.

5. A method as claimed in any of the preceding claim, further comprising:
detecting, by the network entity, in the social media service the followed specific item in a post;
obtaining the post to the network entity by using transmission protocol supported by the social media service;
creating a message according to a transmission protocol used for data and/or messages in the professional mobile radio network;
adding the content of the post to the message; and
transmitting the message to the user apparatuses associated with the specific item.

6. A method as claimed in claim 5, further comprising:
checking whether or not the post is to be filtered away; and
creating the message only in response to the post not being filtered away.

7. A method as claimed in any of the preceding claim, further comprising:
receiving in the network entity a message from a user apparatus of the professional mobile radio network, the message using transmission protocol of the professional mobile radio network;
detecting that the content of the message is for the social media service;
creating in the network entity a post according to a transmission protocol used for posts in the social media service, the post having social media service identity of the network entity as a sender of the post; and
posting the post from the network entity to a social media service account assigned to the social media service identity of the network entity.

8. A method as claimed in any of the preceding claim, further comprising:
receiving in the network entity a message from a user apparatus of the professional mobile radio network, the message using transmission protocol of the professional mobile radio network;
detecting that the content of the message is for the social media service and that the message is to be delivered only within the professional mobile radio network to user apparatuses associated with the specific item; and
transmitting the message to the user apparatuses associated with the specific item.

9. A method as claimed in any of the preceding claim, wherein the professional mobile radio network is a terrestrial trunked radio access network or TETRAPOL network or a public access mobile radio network with professional mobile radio features, or a mobile radio network providing professional mobile radio features.

10. A method as claimed in claim 9, wherein the message is a short data service message.

11. A method as claimed in any of the preceding claim, wherein the social media service is a micro-blog service.

12. A computer program product comprising computer program code configured to perform a method as claimed in any one of claims 1 to 11 when executed on an apparatus.

13. An apparatus comprising means for performing a method as claimed in any one of the claims 1 to 11.

14. A communication system comprising:
a professional mobile radio network comprising as a gateway network entity an apparatus as claimed in claim 13;
a public network to which the gateway network entity is connected;
a server providing social media service, the server being connected to the public network,
wherein social media content is transmitted between the gateway network entity and the server using messages according to the public network protocol and within the professional mobile radio network using messages according to the professional mobile radio protocol.

15. A communication system as claimed in claim 14, wherein one or more user apparatuses of the professional mobile radio network each comprise a client for the social media service.

## Patentansprüche

1. Verfahren, umfassend:
Bereitstellen einer Netzwerkeinheit eines professionellen mobilen Funknetzwerkes mit einer oder mehreren Identitäten eines Sozialmediendienstes, wodurch die Netzwerkeinheit als ein normaler Benutzer für einen Sozialmedien-Server erscheint, der einen Sozialmediendienst bereitstellt;
Empfangen, in der Netzwerkeinheit, von einem Benutzergerät des professionellen mobilen Funknetzwerks, einer Anfrage, einem speziellen Gegenstand in dem Sozialmediendienst zu folgen;
Assoziieren, in der Netzwerkeinheit, des Benutzergerätes mit dem speziellen Gegenstand; und
Registrieren, durch die Netzwerkeinheit mit Hilfe einer Sozialmediendiensteidentität, über die die Netzwerkeinheit verfügt, an dem Sozialmediendienst, um dem speziellen Gegenstand zu folgen.

2. Verfahren nach Anspruch 1, weiterhin umfassend:
Überprüfen, in Erwiderung auf das Empfangen der Anfrage, in der Netzwerkeinheit, ob das Benutzergerät autorisiert ist anzufragen, dem speziellen Gegenstand zu folgen; und,
sofern das Benutzergerät nicht autorisiert ist, Zurückweisen der Anfrage.

3. Verfahren nach Anspruch 1 oder 2, weiterhin umfassend:
Überprüfen in der Netzwerkeinheit, ob es zulässig ist, dem speziellen Gegenstand zu folgen, oder nicht; und sofern nicht, Zurückweisen der Anfrage.

4. Verfahren nach Anspruch 1, 2 oder 3, weiterhin umfassend:
Vergleichen, in der Netzwerkeinheit, des Umfangs von Benutzergeräten, die mit dem speziellen Gegenstand assoziiert sind, mit einem Schwellenwert;
in Erwiderung darauf, dass der Umfang den Schwellenwert überschreitet, Ausbilden einer vorübergehenden Gruppe für die Benutzergeräte; Zuweisen zu der Gruppe einer professionellen mobilen Funkgruppenkennung und Verwenden der Gruppenkennung, um den Sozialmedieninhalt zu senden.

5. Verfahren nach einem der vorhergehenden Ansprüche, weiterhin umfassend:
Erfassen, durch die Netzwerkeinheit in dem Sozialmediendienst, des speziellen Gegenstandes in einem Post, dem gefolgt wird;
Beziehen des Postes für die Netzwerkeinheit unter Verwendung eines Sendeprotokolls, das von dem Sozialmediendienst unterstützt wird;
Verfassen einer Nachricht gemäß einem Sendeprotokoll, das für Daten und/oder Nachrichten in dem professionellen mobilen Funknetzwerk verwendet wird;
Hinzufügen des Inhaltes des Posts zu der Nachricht; und
Senden der Nachricht zu den Benutzergeräten, die mit dem speziellen Gegenstand assoziiert sind.

6. Verfahren nach Anspruch 5, weiterhin umfassend:
Prüfen, ob der Post auszufiltern ist oder nicht; und
Verfassen der Nachricht lediglich in Erwiderung darauf, dass der Post nicht ausgefiltert wird.

7. Verfahren nach einem der vorhergehenden Ansprüche, weiterhin umfassend:
Empfangen, in der Netzwerkeinheit einer Nachricht von einem Benutzergerät des professionellen mobilen Funknetzwerks, wobei die Nachricht ein Sendeprotokoll des professionellen mobilen Funknetzwerks verwendet;
Erfassen, dass der Inhalt der Nachricht für den Sozialmediendienst bestimmt ist;
Verfassen, in der Netzwerkeinheit, eines Posts gemäß einem Sendeprotokoll, das für Posts in dem Sozialmediendienst verwendet wird, wobei der Post eine Sozialmediendienstidentität der Netzwerkeinheit als einen Sender des Posts hat; und
Bereitstellen des Posts von der Netzwerkeinheit für ein Sozialmediendienstkonto, das der Sozialmediendienstidentität der Netzwerkeinheit zugewiesen ist.

8. Verfahren nach einem der vorhergehenden Ansprüche, weiterhin umfassend:
Empfangen, in der Netzwerkeinheit einer Nachricht von einem Benutzergerät des professionellen mobilen Funknetzwerks, wobei die Nachricht ein Sendeprotokoll des professionellen mobilen Funknetzwerks verwendet;
Erfassen, dass der Inhalt der Nachricht für den Sozialmediendienst bestimmt ist und dass die Nachricht nur innerhalb des professionellen mobilen Funknetzwerks zu Benutzergeräten zugestellt werden soll, die mit dem speziellen Gegenstand assoziiert sind; und
Senden der Nachricht zu den Benutzergeräten, die mit dem speziellen Gegenstand assoziiert sind.

9. Verfahren nach einem der vorhergehenden Ansprüche, bei dem das professionelle mobile Funknetzwerk ein terrestrisches Bündelfunk-Zugangsnetzwerk oder ein TETRAPOL-Netzwert oder ein mobiles Funknetzwerk öffentlichen Zugriffs mit professionellen mobilen Funkmerkmalen oder ein mobiles Funknetzwerk ist, das professionelle mobile Funkmerkmale bereitstellt.

10. Verfahren nach Anspruch 9, bei dem die Nachricht eine kurze Datendienstnachricht ist.

11. Verfahren nach einem der vorhergehenden Ansprüche, bei dem der Sozialmediendienst ein Micro-Blog-Dienst ist.

12. Computerprogrammerzeugnis, umfassend Computerprogrammcode, der dazu eingerichtet ist, ein Verfahren nach einem der Ansprüche 1 bis 11 auszuführen, wenn er auf einem Gerät ausgeführt wird.

13. Gerät, umfassend eine Einrichtung für die Ausführung eines Verfahrens nach einem der Ansprüche 1 bis 11.

14. Kommunikationssystem, umfassend:
ein professionelles mobiles Funknetzwerk, das als eine Gateway-Netzwerkeinheit ein Gerät nach Anspruch 13 umfasst;
ein öffentliches Netzwerk, mit dem die Gateway-Netzwerkeinheit verbunden ist;
einen Server, der einen Sozialmediendienst bereitstellt, wobei der Server mit dem öffentlichen Netzwerk verbunden ist,
wobei Sozialmedieninhalt zwischen der Gateweay-Netzwerkeinheit und dem Server mit Hilfe von Nachrichten gemäß dem öffentlichen Netzwerkprotokoll und innerhalb des professionelle mobilen Funknetzwerks mit Hilfe von Nachrichten gemäß dem professionellen mobilen Funkprotokoll übertragen werden.

15. Kommunikationssystem nach Anspruch 14, bei dem ein oder mehrere Geräte des professionellen mobilen Funknetzwerks jeweils einen Client für den sozialen Mediendienst umfassen.

## Revendications

1. Procédé comprenant les étapes consistant à :
doter une entité de réseau d'un réseau de radiocommunication mobile professionnelle, d'une ou de plusieurs identités de service de média social grâce auxquelles l'entité de réseau apparaît comme étant un utilisateur normal vis-à-vis d'un serveur de média social qui procure un service de média social ;
recevoir, dans l'entité de réseau, en provenance d'un appareil d'utilisateur du réseau de radiocommunication mobile professionnelle, une demande consistant à suivre un élément spécifique dans le service de média social ;
associer, dans l'entité de réseau, l'appareil d'utilisateur à l'élément spécifique ; et
enregistrer, à l'aide de l'entité de réseau qui utilise une identité de service de média social l'identité que présente l'entité de réseau, auprès du service de média social de façon à suivre l'élément spécifique.

2. Procédé selon la revendication 1, comprenant en outre les étapes consistant à :
vérifier, en réponse à la réception de la demande, dans l'entité de réseau, si l'appareil d'utilisateur est autorisé ou non à demander de suivre l'élément spécifique ; et
si l'appareil d'utilisateur n'est pas autorisé, rejeter la demande.

3. Procédé selon la revendication 1 ou la revendication 2, comprenant en outre les étapes consistant à :
vérifier dans l'entité de réseau, s'il est autorisé ou non à suivre l'élément spécifique ; et s'il ne l'est pas, rejeter la demande.

4. Procédé selon l'une quelconque des revendications 1 à 3, comprenant en outre les étapes consistant à :
comparer, dans l'entité de réseau, le nombre d'appareils d'utilisateur associés à l'élément spécifié, par rapport à un seuil ;
en réponse à un nombre qui dépasse le seuil, constituer un groupe provisoire des appareils d'utilisateur ;
attribuer au groupe un identifiant de groupe de radiocommunication mobile professionnelle, et
utiliser l'identifiant de groupe de façon à transmettre un contenu de média social.

5. Procédé selon l'une quelconque des revendications précédentes, comprenant en outre les étapes consistant à :
détecter, à l'aide de l'entité de réseau, dans le service de média social, l'élément spécifique suivi dans un billet ;
obtenir le billet auprès de l'entité de réseau en utilisant un protocole de transmission supporté par le service de média social ;
créer un message selon un protocole de transmission utilisé pour des données et / ou des messages dans le réseau de radiocommunication mobile professionnelle ;
ajouter le contenu du billet au message ; et
transmettre le message aux appareils d'utilisateur associés à l'élément spécifique.

6. Procédé selon la revendication 5, comprenant en outre les étapes consistant à :
vérifier si le billet doit être filtré ; et
créer le message seulement en réponse au billet qui n'est pas filtré.

7. Procédé selon l'une quelconque des revendications précédentes, comprenant en outre les étapes consistant à :
recevoir dans l'entité de réseau, un message en provenance d'un appareil d'utilisateur du réseau de radiocommunication mobile professionnelle, le message en utilisant le protocole de transmission du réseau de radiocommunication mobile professionnelle ;
détecter que le contenu du message concerne le service de média social ;
créer, dans l'entité de réseau, un billet selon un protocole de transmission utilisé pour les billets dans le service de média social, le billet présentant l'identité de service de média social de l'entité de réseau en tant qu'émetteur du billet ; et
publier le billet à partir de l'entité de réseau vers un compte de service de média social attribué à l'identité de service de média social de l'entité de réseau.

8. Procédé selon l'une quelconque des revendications précédentes, comprenant en outre les étapes consistant à :
recevoir dans l'entité de réseau, un message en provenance d'un appareil d'utilisateur du réseau de radiocommunication mobile professionnelle, le message en utilisant le protocole de transmission du réseau de radiocommunication mobile professionnelle ;
détecter que le contenu du message concerne le service de média social, et que le message ne doit être remis à l'intérieur du réseau de radiocommunication mobile professionnelle, qu'aux appareils d'utilisateur associés à l'élément spécifique ; et
transmettre le message aux appareils d'utilisateur associés à l'élément spécifique.

9. Procédé selon l'une quelconque des revendications précédentes, dans lequel le réseau de radiocommunication mobile professionnelle est un réseau de radiocommunication terrestre à ressources partagées, ou un réseau TETRAPOL, ou un réseau de radiocommunication mobile à accès public avec des caractéristiques de radiocommunication mobile professionnelle, ou un réseau de radiocommunication mobile qui fournit des caractéristiques de radiocommunication mobile professionnelle.

10. Procédé selon la revendication 9, dans lequel le message est un message SDS (short data service).

11. Procédé selon l'une quelconque des revendications précédentes, dans lequel le service de média social est un service de micro-blog.

12. Produit programme informatique comprenant un code de programme informatique configuré de façon à exécuter un procédé selon l'une quelconque des revendications 1 à 11, lorsqu'il est exécuté dans un appareil.

13. Appareil comprenant des moyens destinés à exécuter un procédé selon l'une quelconque des revendications 1 à 11.

14. Système de communication comprenant :
un réseau de radiocommunication mobile professionnelle qui comprend en tant qu'entité de réseau de passerelle, un appareil selon la revendication 13 ;
un réseau public auquel est connectée l'entité de réseau de passerelle ;
un serveur qui fournit un service de média social, le serveur étant connecté au réseau public ;
dans lequel le contenu de média social est transmis entre l'entité de réseau de passerelle et le serveur en utilisant des messages selon le protocole de réseau public, et à l'intérieur du réseau de radiocommunication mobile professionnelle en utilisant des messages selon le protocole de radiocommunication mobile professionnelle.

15. Système de communication selon la revendication 14, dans lequel un ou plusieurs appareils d'utilisateur du réseau de radiocommunication mobile professionnelle, comprennent chacun un client du service de média social.
